# EUROPEAN PATENT SPECIFICATION

(11) **EP 1 724 008 B1**
(45) Date of publication and mention of the grant of the patent: **05.12.2007**
(21) Application number: 06113397.1
(22) Date of filing: 02.05.2006
(51) Int. Cl.: B01F 15/00

(54) **Swivel mixer for liquids in containers with small-dimension opening**
Schwenkbarer Mischer für Flüssigkeiten in einem Behälter mit kleiner Öffnung
Mélangeur pivotant pour liquides dans un conteneur à ouverture de petite dimension

(30) Priority: 16.05.2005 IT MI20050884
(43) Date of publication of application: 22.11.2006
(73) Proprietor: Guerra, Lauro, 42015 Correggio RE (IT)
(72) Inventor: Guerra, Lauro, 42015 Correggio RE (IT)
(74) Representative: Giambrocono, Alfonso

(56) References cited:
- US-A- 3 559 962
- US-A- 4 083 653
- US-A- 5 941 636
- US-A1- 2005 088 907
- US-B1- 6 247 837

## Description

The present invention relates to a device enabling a liquid to be mixed in containers the opening of which has dimensions which do not enable conventional propeller mixers to be inserted; and in particular a device for effecting that operation which enologists know by the French term "batonnage"

The most valued wines are known to be often kept in wooden casks during the initial stage of their ageing, in which stage the so-called lees form to partly deposit on the cask bottom and partly collect on the top of the wine contained in the cask.

It has long been known to enologists that periodic mixing of the wine contained in the casks (by which the lees are again put into suspension) gives the wine those characteristics of taste and bouquet particularly sought by the connoisseur, so decidedly improving its quality and in particular its overall olfactory taste, in addition to achieving tartaric and protein stability. This operation is carried out at a frequency ranging from once per month to 2-3 times per week, depending on the type of wine and on the result to be obtained.

Various methods and instruments are used for the batonnage.

One method consists simply of rolling the casks, with the evident problems that this involves. The most modern version of this method uses a system in which the casks, maintained recumbent, are supported by rollers which enable them to be rotated about their horizontal axis by suitable operating means.

Other methods use manual implements inserted through the opening with which the casks are provided, and which, with the casks recumbent, must be located at the highest point of the cask. This opening is known to be fairly small and closed by a stopper. The casks, lying horizontally, can also be disposed stacked (up to seven levels), in which case little space normally remains between two superposed casks, this being determining for batonnage purposes. The implements used for this purpose range from a simple wooden stick to a stainless steel bar, to one end of this latter there being fixed a length of stainless steel chain. By gripping this bar at its other end, after inserting the chain and part of the bar into the cask through the said opening, a certain mixing of the wine can be achieved.

Instead of being provided with a chain, the said bar can be provided at one end with radial blades or fins, the length of which is evidently very small, being determined by the small dimensions of said opening in the cask.

It should also be noted that all the briefly described above batonnage methods enable only modest and by no means optimal wine mixing to be achieved. This is also due to the fact that manual methods have the further drawback of being decidedly tiring for the operator after a certain time, so that the operator tries to reduce to a minimum the time and effort dedicated to this operation.

To complete the picture, in enology a mixer device is known consisting essentially of a shaft, driven by an electric motor, on the free end of which two blades are disposed pivoted on the same radial pin perpendicular to the shaft axis. When the motor is operated, the two blades, initially pointing downwards, become positioned radially by centrifugal force, to hence mix the liquid in which they are immersed. This device is able to be inserted through the upper opening of recumbent casks because when at rest the two blades point downwards. However, in addition to having only two blades (more than two cannot be provided because of the manner in which they are pivoted), it is rather heavy and bulky, to the extent that two persons are required to handle it. This device also operates at too high a speed (1800 r.p.m.), this being decidedly traumatic for the wine. This device also presents the drawback that, not being able to be swivelled and guided, its rotating blades can strike against the container walls, so damaging them (this is particularly serious in the case of casks, which have a high cost).

MI2003A000658, the proprietor of which is also the inventor in the present application, describes a light, manageable device for mixing liquids contained in containers having a small-dimension upper opening, such as casks. This mixer device comprises a hub rotatable by means of a linear rotary movement transmission means. The hub can be provided with more than two angularly equidistant blades shaped as a helix, each blade being able to assume two end positions, namely a working position in which the blades extend from the hub in substantially a radial direction, and a rest position in which the blades are folded close to the axis of rotation of the hub. The blades pass from their rest position to their working position by virtue of the resistance opposed by the liquid when the hub is rotated. The unit formed by the hub and the folded blades (rest position) has an overall size enabling this unit to be inserted through the upper opening of a cask. The direction of rotation of the hub-blade unit for mixing the liquid in the container is chosen such that the liquid is urged upwards by the blades.

In the embodiment described and illustrated in MI2003A000658 the linear rotary movement transmission means is specifically of flexible type, so that it can be folded to enable the hub-blade unit to be inserted through the container opening even when there is little space in front of this opening, as happens when the casks are stacked. The operating means used is conveniently a hand drill, which is light and manageable, and of which the spindle can be rotated at a speed not traumatic for the wine, or a reduction gear can be provided. A suitable mechanism enables the rotary movement of the hand drill shaft to be transmitted to the corresponding end of the linear movement transmission element.

The aforedescribed mixer device is also provided with a closure element or stopper for the container opening. The stopper presents a central through hole enabling the linear transmission means to pass through it. The stopper also supports the rest of the mixer device enabling this latter to be applied to a cask, with the hub-blade unit and part of the linear movement transmission means inside it (the linear element lying vertically by gravity) without the blades touching the cask bottom.

When the drill is operated, the device blades (normal at least three), because of the configuration of their profile and the resistance opposed by the liquid contained in the cask, lie automatically in their working position, urging the liquid upwards. Consequently the flexible linear means which transmits the rotary movement is put under tension and the hub-blade unit operates while remaining disposed vertically below the cask opening.

It has however been found that, although excellent mixing of the lees lying within the centre of the recumbent cask is achieved, of an intensity not traumatic for the wine, the same does not apply to the lees lying close to the two ends of the cask. It should however be noted that MI2003A000658 does not exclude the facility of making the linear movement transmission means rigidly bendable, in which case it might be thought to incline it to the vertical passing through the cask upper opening, so also mixing the lees lying close to the two ends of a cask. It should however be noted that the stopper with which the cask is provided does not allow this. It should also be noted that even if said linear transmission means could be inclined (in the limit, removing the stopper), it could happen that the rotating blades strike against the cask inner walls, with the aforesaid drawbacks.

Another prior art mixer is disclosed in US-A-3559962.

An object of the present invention is therefore to provide a mixer device of the type just described which in addition to being able to swivel (so that it can also mix the lees deposited on the bottom of the cask close to the two ends), at the same time prevents the rotating blades making contact with the inner walls of the container (in particular of a cask).

Another object is to provide a mixer device of the aforestated type which can be easily inserted into a container even if the space in front of the container upper opening is small, as in the stated case of stacked casks.

At this point it should be noted that following use of the mixer device described in MI2003A0000658 (in which, as stated, the liquid is urged upwards by the hub-blade unit), some wine producers have stated a requirement for a mixer device which instead urges the liquid downwards. According to these, by acting in this manner better results are achieved during the batonnage.

As will be apparent, it is not possible to urge the liquid downwards by the mixer device of MI2003A0000658, even if using a linear movement transmission means which is rigid against flexure. In this respect, as the blades pass from their rest position to their working position by virtue of the resistance opposed to hub rotation by the liquid, if the direction of rotation of the hub-blade unit is reversed (in order to urge the liquid downwards), the blades would not open.

A further object of the present invention is therefore to provide a mixer, of the aforesaid type, which is able to urge the liquid contained in the container downwards.

The initially stated object is attained according to the present invention by a mixer device comprising:
a rotatable hub provided with at least two angularly equidistant blades which can assume two end positions, namely a working position in which the blades extend from the hub substantially in a radial direction, and a rest position in which the blades are folded close to the axis of rotation of the hub;
a linear means for transmitting rotary movement from a drive shaft to the hub, the linear transmission means being rigid against flexure during operation, so enabling it to be swivelled;
a closure element to be applied to the opening of the container containing the liquid to be mixed, the closure element presenting a through hole enabling the linear transmission means to pass through the closure element, this latter supporting the rest of the mixer device such as to limit its insertion;
characterised in that the through hole present in the closure element has dimensions which enable the linear transmission means to be swivelled, while at the same time limiting its extent in order to prevent the blades from coming into contact with the container inner walls during operation.

Hence the through hole in the closure element acts as a swivel limiter, so in a very simple manner preventing damage to the container interior.

In particular, in the case of casks, the through hole in the closure element is substantially in the shape of a slot, the axis of which must be disposed parallel to the axis of the recumbent cask. When the cask dimensions change, closure elements with specific slot dimensions and orientation must be used.

According to a very simple embodiment of the present invention, usable when there are no problems of reduced space in front of the container opening, the linear movement transmission means is a piece of tube or a rigid bar.

According to a variant, the linear transmission means for the rotary movement is flexible (for example a flexible cable) but is contained within a piece of tube to enable it to be swivelled.

The second aforesaid object can also be attained by the device of the present invention, but in which the linear transmission means is composed of two or more consecutive rigid portions, each rigid portion being able to be inclined to the adjacent rigid portion, means being provided to make the rigid portions rigid with each other and with the hub, to obtain an assembly which can be swivelled during operation.

According to a variant, the linear transmission means is flexible and is inserted through two or more consecutive rigid tube pieces, means being provided to make the tube pieces and hub rigid with each other to enable the assembly to be swivelled.

According to another variant, elastic spacer means can be interposed between the tube pieces and between the hub and that tube piece closest thereto in order to maintain the tube pieces spaced apart and spaced from the hub when at rest.

In one embodiment of the invention, the means for making the tube pieces rigid with each other and with the hub comprise means for taking up the distance between the tube pieces and between the hub and that tube piece closest to it, and also male and female coupling means provided respectively on the adjacent ends of the tube pieces and on the hub and the adjacent end of that tube piece closest to the hub, the coupling means enabling the assembly formed from the tube pieces and the hub to be swivelled.

The mixer device of the latter two variants can also be used when there is reduced space in front of the upper opening of the container (as in the case of recumbent stacked casks), because the relative rigid portions of the linear movement transmission means or the rigid tube pieces can be mutually inclined to enable them to be inserted into the container.

Conveniently said take-up means comprise: a tubular take-up element, one end of which is coaxially fixed to that end of the flexible transmission means distant from the hub, the tubular take-up element presenting two angularly equidistant helical slits with which two respective diametrically opposing projections provided on the drive shaft engage; and means for initially blocking rotation of the tubular take-up element so that by virtue of the pair of helical slits the rotation impressed by the drive shaft enables the relative end of the flexible linear means to be shifted towards the drive shaft to take up the distance between the tube pieces and the distance between the hub and the adjacent tube piece.

Preferably the near end of the blades is hinged to the hub so that they can pass from their rest position (blades substantially parallel to the hub axis) to their working position (blades extending in a substantially radial direction), and vice versa, by rotation about their respective hinging axis lying in a plane perpendicular to this latter, the blade hinging axis not however intersecting the hub axis.

Conveniently, said means for initially blocking the rotation of the tubular take-up element comprise a locking ring rotatably mounted on a ring support bush, the locking ring internally presenting at least two angularly equidistant cam surfaces, each arranged to cooperate with a relative shoe which in its turn interferes with the lateral surface of the tubular take-up element when the locking ring is rotated from a rest position, in which the shoes do not interfere, to a locking position in which the shoes interfere.

It will be apparent that by choosing a suitable profile for the blades, a mixer of the aforesaid type can be obtained which is able to urge the liquid upwards or downwards, according to client requirements.

The invention will be more apparent from the ensuing description of some embodiments thereof given by way of example. In the description reference is made to the accompanying drawings, in which:
Figure 1 is a perspective exploded view of a mixer device according to the present invention;
Figure 2 shows the same device mounted and in its rest condition;
Figure 3 is a partial longitudinal section through the device, that part which in the figure lies to the left representing it in its rest condition and that part to the right representing it at the start of operation, after the take-up stage;
Figure 4 shows how the linear movement transmission element can be folded when the device is in the rest condition, to enable it to be inserted through the upper opening of a recumbent cask when the space above this opening is reduced (in particular by the presence of an overlying cask);
Figure 5 is a perspective view showing a cut-through cask, to the upper opening of which the mixer device has already been applied, but is still in the rest condition;
Figure 6 shows how the mixer device, when in operation, can be swivelled within the cask of Figure 5;
Figure 7 shows a detail of a variant of the device of the invention showing, longitudinally sectioned, two consecutive rigid portions forming a different linear transmission means and shown in the condition in which they are inclined one to the other;
Figure 8 shows the same two rigid portions as Figure 7, but in the condition in which they are aligned and mutually rigid;
Figure 9 is a view of the two said portions in the same condition as Figure 8, but seen from a point rotated through 90° from that of this latter figure.

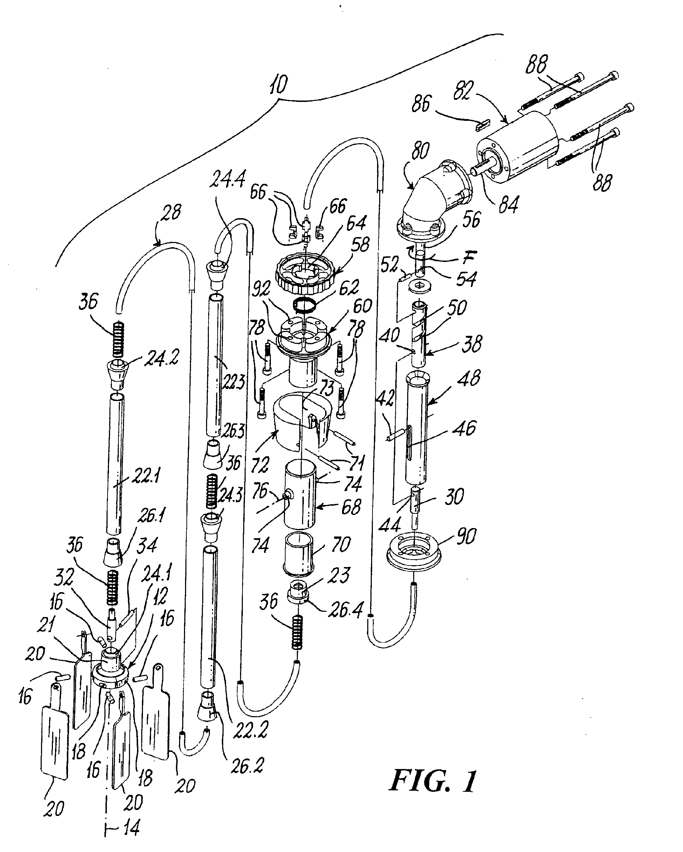

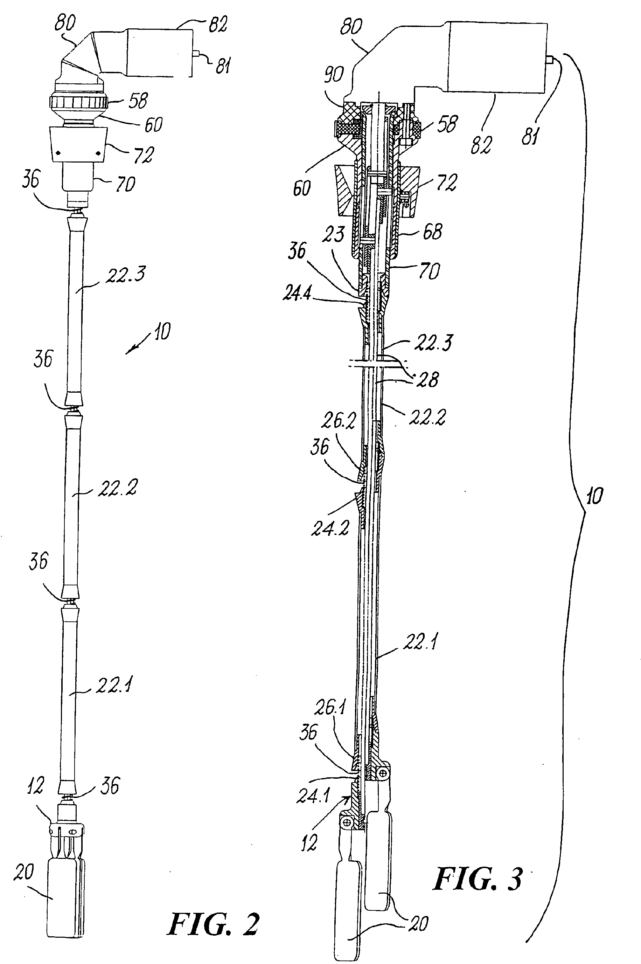

As can be seen from Figure 1, the mixer device 10 comprises a hub 12, the axis of rotation of which is indicated by 14. In this specific case, four blades 20 are hinged angularly equidistant to the hub 12. Hinging is by respective pins 16 received in corresponding seats 18 provided in the body of the hub 12. As can be seen, the axis of the pins 16 is perpendicular to the axis 14 of the hub 12 but does not cut this axis. The hub 12 presents a coaxial tubular projection 21, the free end of which presents a male coupling means 24.1 consisting of an annular projection of frusto-conical shape. The frusto-conical projection 24.1 mates with a frusto-conical cavity (visible in Figure 3) provided in a self-centering female coupling means 26.1 consisting of a bush, a cylindrical end part of which is forcibly insertable into an end of a first tube piece 22.1. This latter is provided at its other end with a self-centering male coupling means 24.2 consisting of a bush provided with a cylindrical end forcibly insertable into the corresponding end of the tube piece 22.1, the other end of the bush presenting a frusto-conical projection identical to the frusto-conical projection 24.1 and arranged to mate with the frusto-conical cavity (also visible in Figure 3) provided in a female coupling means 26.2 (identical to the female coupling means 26.1) provided on an end of a second tube piece 22.2 which, in this specific case, is identical to the tube piece 22.1. The same is valid for the third tube piece 22.3, provided with a female coupling means 26.3 which mates with the male coupling means 24.3 and with a male coupling means 24.4 insertable into a counteracting bush 23 presenting a female coupling means 26.4.

All the tube pieces 22.1, 22.2, 22.3 and the counteracting bush 23 are mounted, one after another, on a flexible linear means 28 which enables the rotary movement applied to one end 30 to be transmitted to its other end 32 which, being fixable to the hub 12 by a pin 34, rotates the hub 12 about its axis 14. Consequently, when a torque is applied to the end 30 of the flexible linear means 28, it is transmitted to the hub 12.

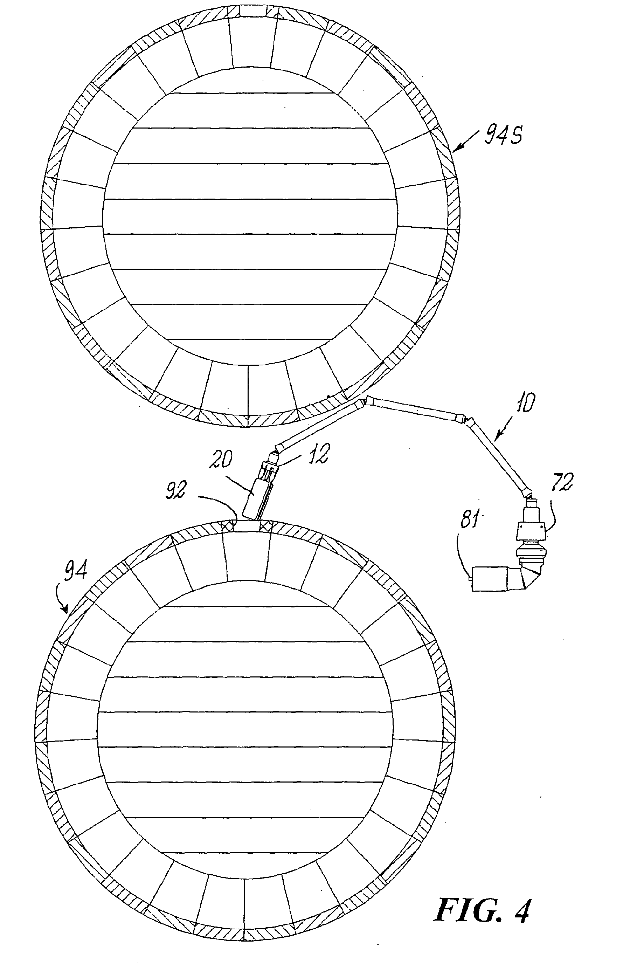

From Figure 1 it can be seen that between the male coupling means 24 and the corresponding female coupling means 26 there is disposed a relative elastic spacer element 36, in this specific case consisting of a helical spring mounted on the flexible linear means 28. The length of the flexible linear means 28 must be chosen such that with the mixer device 10 mounted, the elastic elements 36 maintain the various tube pieces 22.1-22.3 and the hub 12 spaced apart, as shown in Figure 2. This makes the mixer device 10 articulated, and can for example assume the configuration shown in Figure 4.

As already stated, the mixer device 10 is provided with means for taking up the distance between the various tube pieces 22.1, 22.2, 22.3 and between the tube piece 22.1 and the hub 12, to enable the assembly of these elements, by virtue of the coupling means 24, 26, to behave when flexed as a single rigid bent rod, which can hence be swivelled.

In the specific illustrated case, the take-up means comprise a tubular take-up element 38, to the lower end of which the end 30 of the flexible linear element 28 is fixed. This is done by providing at the lower end of the tubular take-up element 38 two diametrical through holes (in Figure 1 only one is visible, indicated by 40) through which a diametrical pin 42 is inserted to also pass through a diametrical through hole 44 provided in the end 30 of the flexible linear element 28. The pin 42 has a length enabling its two ends to enter corresponding diametrically opposing longitudinal slots (of which one, indicated by 46, is visible in Figure 1) provided in a tubular guide element 48 which internally receives the tubular take-up element 38 slidably and coaxially. Consequently, by virtue of the pin 42, this latter can slide (to the extent allowed by the length of the slots 46) in both directions within the tubular guide element 48, but cannot rotate about it. As can be seen from Figure 1, the tubular take-up element 38 presents two angularly equidistant helical slots 50, each of which is able to receive one of the two ends of a second pin 52 insertable through a diametrical hole 54 provided at the free end of a drive shaft 56. In this specific case, this latter is the output shaft of a transmission mechanism 80 described hereinafter.

It will be apparent that in order to achieve said take-up to enable the assembly comprising the tube pieces 22.1, 22.2, 22.3 and the hub 12 to be swivelled (in practice by pulling the elements 12, 22.1, 22.2, 22.3, 48 together), the tubular guide element 48 must be held unable to rotate - as is consequently the tubular take-up element 38, which can however move axially relative to the element 48 - while the drive shaft 56 is rotated. In this respect, with the mixer device 10 at rest (Figure 2) and by choosing a suitable inclination for the helical slots 50, the two ends of the pin 52 lie automatically at the lowest point of the relative helical slot 50 by gravity and, in this specific case, by virtue of the springs 36 (which are not however absolutely essential), the tubular take-up element 38 lies automatically in its lowest position within the tubular guide element 48. On operating the drive shaft 56 in the direction of the arrow F and holding the tubular guide element 48 so that it does not rotate, the tubular take-up element 38 is urged upwards relative to this latter, until the two ends of the pin 52 reach the lower end of the helical slots 50. As the end 30 of the flexible linear means 28 is fixed to the lower end of the tubular take-up element 38, the flexible linear means 28 is consequently pulled upwards, to also pull upwards the hub 12 against the forces exerted by the elastic spacer elements 36 (if these are provided, as in the illustrated case). If the torque applied to the drive shaft 56 is of sufficient intensity, the opposing force of the elastic spacer elements 36 (already partly opposed by the force of gravity) can be overcome, so that the hub 12 and the tube pieces 22.1-22.3 become coupled together by virtue of the relative male coupling means 24 and female coupling means 26. The assembly obtained consequently behaves as a single rod against flexure.

The means for blocking, when required, the rotation of the tubular guide element 48 comprise in this specific case a locking ring 58 mounted rotatable on a ring support bush 60, so that the ring 58 can be rotated manually through a predetermined angle about the bush 60. An elastic return element 62, in the form of a torsion spring, returns the ring 58, when released, into its initial angular position. As can be seen from Figure 1, the locking ring 58 internally presents four angularly equidistant cam surfaces 64, each arranged to cooperate with a relative shoe 66 which interferes with the lateral surface of the tubular guide element 48 when the locking ring 58 is moved from its rest position (in which the shoes 66 do not interfere) to its locking position (in which the shoes 66 interfere), against the action of the torsion spring 62. The result is that rotation of the tubular guide element 48 about the ring support bush 60 is prevented. This latter is carried by a coaxial sleeve 68, into the lower end of which a tubular bush 70 is coaxially fixed. The already stated counteracting bush 23 presents the already stated female coupling means 26.4 (visible in Figure 3 and having the same function, for example, as the female coupling means 26.1). The female coupling means 26.4 engages in the tubular guide element 48 and is arranged to mate with the male coupling means 24.4 provided at the upper end of the tube piece 22.3.

The support sleeve 68 is carried by a closure element 72 (shown partly cut away in Figure 1) presenting a slotted through hole 73. The closure element 72 is merely a stopper (preferably of a suitable plastic material) to be inserted into the upper opening 92 of a recumbent cask 94. The stopper 72 presents means (pins 71) cooperating with relative diametrical projections 74 provided on the support sleeve 68, to enable this latter to rotate about the stopper 72 within a determined angular range about a horizontal axis 76 (hence enabling swivelling). This enables the device 10 to be supported, in addition to defining the extent to which it is inserted into the cask 94. It will be apparent that the through hole 73 must necessarily be substantially in the form of a slot (viewing the stopper 72 from the top downwards), the slot axis being necessarily disposed parallel to the cask axis. As already stated, the dimensions of the slot 73 are chosen such that during the use of the mixer device 10, the blades 20 do not make contact with the inner walls of the cask 94 during swivelling.

As already stated, the drive shaft 56 forms part of a conventional mechanism 80 for angular (in this specific case 90°) transmission of rotary movement. A reduction gear 82 is connected to the transmission mechanism 80 because in this case it is assumed that the drive means used will be a conventional hand drill (not shown), the chuck of which can be conventionally connected to the drive shaft 81 (Figure 4) of the reduction gear 82, the driven shaft 84 of this latter being coupled conventionally (in the illustrated case by a key 86, visible in Figure 1) to the corresponding shaft (not shown for simplicity) of the corresponding end of the transmission mechanism 80. Screws 88 are used to fix the reduction gear 82 to the transmission mechanism 80. That end of this latter from which the drive shaft 56 projects is fixed, by way of a ring cover bush 90, to the ring support bush 60 by screws 78 inserted into relative holes 92 provided in the bush 60.

If the transmission mechanism 80 is not required, the drive shaft becomes the driven shaft 84 of the reduction gear 82, which is rigidly connected in a conventional manner to the end 30 of the flexible linear element 28.

Although the use and operation of the mixer device 10 are apparent from the aforegoing, they will be briefly described for clarity's sake.

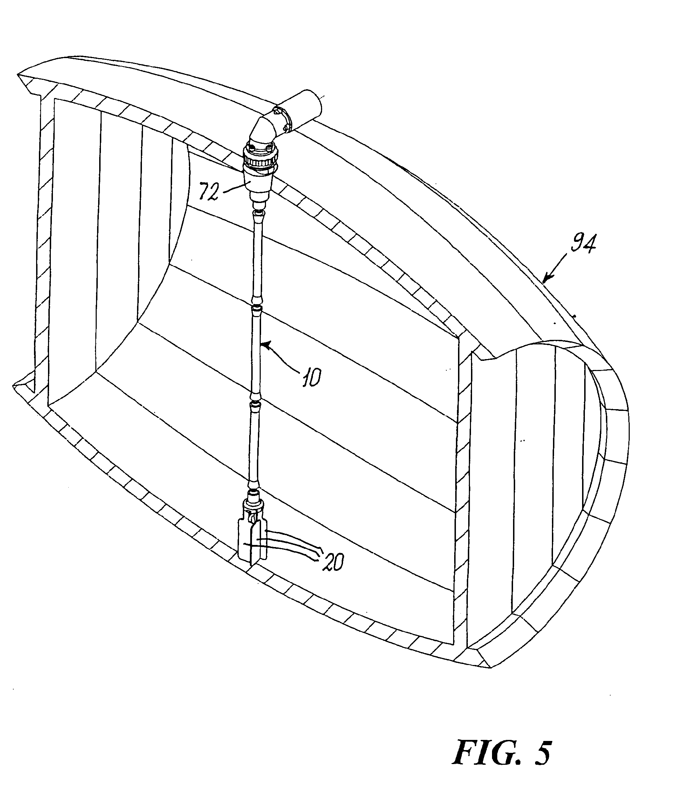

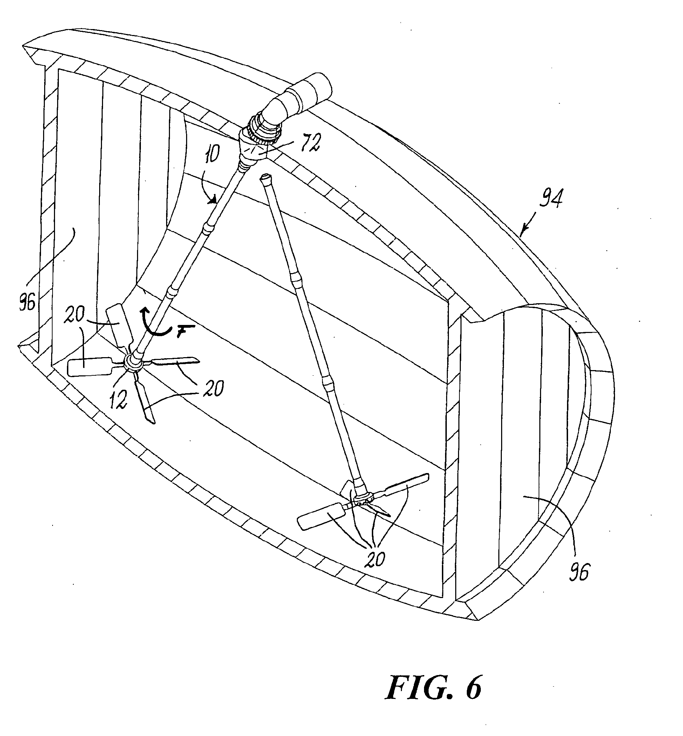

As already stated, when the mixer device 10 is in its rest condition (Figure 2) it can be set in the configuration of Figure 4. This enables the hub-blade unit 11 (Figure 2) to be inserted through the upper opening 92 of a recumbent cask 94, even in a situation such as that represented in Figure 4 (the presence of an overlying cask 94S). When the closure element 72 of the device 10 has been fitted to the opening 92 of the cask 94 with the axis of the slot 73 parallel to the axis of the cask 94, the situation shown in Figure 5 is obtained, in which the assembly of tube pieces 22.1-22.3 and the underlying hub-blade unit are aligned vertically and spaced apart. At this point the chuck of a conventional hand drill (not shown for simplicity) is fitted in conventional manner to the free end of the reduction gear 82. The locking ring 58 is now rotated as far as possible, and while holding it in this position (so that the ring support bush 60 becomes rotatably rigid with the tubular guide element 48) the drill (which is gripped with the other hand and its clutch set to rotate in the appropriate direction, which can conveniently be indicated on the outer surface of the reduction gear 82) is operated, with the result that initially the spaces between the hub 12 and the tube piece 22.1 and between the tube pieces 22.1-22.3 are taken up against the action of the elastic spacer means 36 (which, as stated, could however be dispensed with). Consequently, by virtue of the presence of the coupling means 24, 26, the combined tube pieces and hub 12 behave as a single rod against flexure. As the drilling operation continues, the locking ring 58 at a certain moment is forced to return to its initial position (so that the operator can release it). Consequently the rotary movement is now transmitted directly to the flexible linear element 28 and hence to the hub 12, which begins to rotate. As already stated, by suitably orientating the blades 20 immersed in the liquid contained in the cask 94, the resistance exerted on the blades 20 by the liquid causes these to pass automatically from their rest position to their working position, in which they extend substantially radially from the hub 12, to form an actual propeller able to urge the liquid downwards. However, it is clear that, if required, the liquid can be urged upwards instead of downwards. At this point the combined tube pieces 22.1-22.3 and hub 12 can be swivelled, as shown in Figure 6. If the liquid contained in the cask is wine, all the lees contained in the cask 94 can therefore be mixed, even those deposited on the cask bottom close to its two ends 96, these lees hence being re-suspended. If the dimensions of the slot 73 have been suitably chosen and if the slot 73 has been orientated correctly (in the limit, for a determined container, the required orientation can be indicated on the stopper), the blades 20 will never strike against the inner walls of the cask 94.

When it is considered that the liquid has been sufficiently mixed, the drill is halted to enable the mixer device 10 to return automatically to the condition of Figure 5, enabling it to be extracted from the cask 94, ready for reuse.

From the aforegoing it is apparent that the mixer device of the present invention could be formed such as to be operated manually instead of by an electric hand drill. For this purpose a simple conventional mechanism of suitable type (for example a crank mechanism) is sufficient.

The aforedescribed and illustrated mixer is arranged to urge the liquid downwards. This does not mean that the present invention cannot embody a mixer device which urges the liquid upwards. To achieve this result, the aforedescribed hub-blade unit merely has to be replaced by a hub-blade unit in which the blades are shaped to achieve this result.

It is important to note that to achieve the initially stated object (although not the second) a much simpler embodiment than that described with reference to Figures 1-6 can be used. More specifically, the linear transmission means can be formed from a single rigid portion (for example a bar or tube piece) of suitable length, to one end of which a hub-blade unit substantially as that of Figures 1-3 is fixed, the other end of the rigid linear means being connectable to a drive shaft. In the case of casks, a closure element similar to that visible in Figures 1-3 is also provided. As will be apparent, such a solution falls within the scope of protection defined by claim 1, and is so simple that no further description is required.

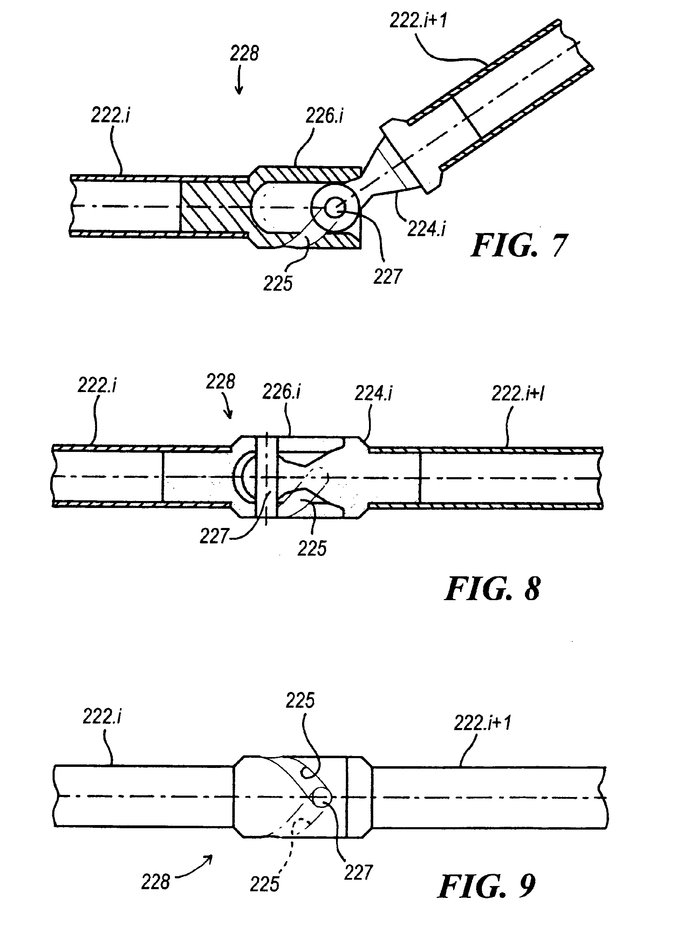

A variant less simple than the preceding, but which achieves the second stated object, and is still simpler than the embodiment of Figures 1-3, uses the solution shown in Figures 7-9, in which the linear movement transmission means (shown only partially in these figures and indicated overall by 228) is of broken line shape and composed of a determined number of rigid portions (in the specific illustrated case two can be partially seen, i.e. the tube pieces 222.i and 222.i+1), to one end of which a female coupling means 226.i is fixed (in the illustrated case, by forcing), and to the other end a male coupling means 224.i, to obtain the situation of Figures 7-9. As can be seen from these latter, in the female coupling means 226.i there are provided two angularly equidistant helical slots 225, into which a relative end of a diametrical pin 227 enters, the two ends of the pin 227 projecting from a through diametrical hole provided in the end of the male coupling means 226.i. The connection joint shown in Figures 7-9 enables the various tube pieces 222 to be manually inclined to each other, enabling the relative mixer to be inserted into containers with little space in front of their opening (for example stacked casks). A similar connection joint is obviously provided between the hub and the corresponding end of that tube piece 222 closest to the hub.

By choosing a suitable direction of rotation for the hub, the various joints can, by virtue of the resistance opposed by the blades, be made to pass from the condition of Figure 7 (in which the various tube pieces 222 can be rotated relative to each other) to that of Figures 8 and 9 in which the tube piece assembly behaves as a single rod against flexure, and can therefore be swivelled. Again in this case a closure element is obviously provided which, in the case of casks, can be similar to the closure element 72 of Figures 1-3, i.e. provided with a slot 73 of such dimensions as to prevent the moving blades from coming into contact with the inner walls of the cask.

Again in this case the closure element is provided with conventional means for supporting that tube piece 222 located closest to the operating means (and consequently also supporting all the other tube pieces 222 and the hub with blades) while enabling the said tube piece 222 to rotate about its axis, these support means also having at the same time to also allow swivelling.

## Claims

1. A mixer device (10) for mixing a liquid contained in containers (94) with a small-dimension opening (92), comprising:
a rotatable hub (12) provided with at least two angularly equidistant blades (20) which can assume two end positions, namely a working position in which the blades (20) extend from the hub (12) substantially in a radial direction, and a rest position in which the blades (20) are folded close to the axis of rotation (14) of the hub (12);
a linear means (28; 228) for transmitting rotary movement from a drive shaft (56) to the hub (12), the linear transmission means (28; 228) being rigid against flexure during operation, so enabling it to be swivelled;
a closure element (72) to be applied to the opening (92) of the container (94), the closure element (72) presenting a through hole (73) enabling the linear transmission means (28; 228) to pass through the closure element (72), this latter (72) supporting the rest of the mixer device (10) such as to limit its insertion;
**characterised in that** the through hole (73) present in the closure element (72) has dimensions which enable the linear transmission means (28; 228) to be swivelled, while at the same time limiting its extent in order to prevent the blades (20) from coming into contact with the inner walls (96) of the container (94) during operation.

2. A mixer device (10) as claimed in claim 1, wherein, if the container is a recumbent cask (94), the through hole (73) in the closure element (72) assumes a shape substantially in the form of a slot, the axis of which must be disposed parallel to the axis of the cask (94).

3. A mixer device as claimed in claim 1, wherein the linear transmission means for the rotary movement is a piece of tube or a rigid bar.

4. A mixer device as claimed in claim 1, wherein the linear transmission means for the rotary movement is flexible, but is contained within a piece of tube.

5. A mixer device as claimed in claim 1, wherein the linear transmission means (228) is composed of two or more consecutive rigid portions (222), each rigid portion (222.i) being able to be inclined to the adjacent rigid portion (222.i+1), means (225, 227) being provided to make the rigid portions (222) rigid with each other and with the hub (12), to obtain an assembly which can be swivelled during operation.

6. A mixer device (10) as claimed in claim 1, wherein the rotary movement transmission means (28) is flexible and is inserted through two or more consecutive rigid tube pieces (22), means (24, 26) being provided to make the tube pieces (22) and hub (12) rigid with each other to enable the assembly to be swivelled.

7. A mixer device (10) as claimed in claim 6, wherein elastic spacer means (36) are interposed between the tube pieces (22) and between the hub (12) and that tube piece (22.1) closest thereto (12) in order to maintain the tube pieces (22) spaced apart and spaced from the hub (12) when at rest.

8. A mixer device (10) as claimed in claim 6, wherein the means for making the tube pieces (22) and the hub (12) rigid with each other comprise means (38, 50, 48, 46) for taking up the distance between the tube pieces (22) and between the hub (12) and that tube piece (22.1) closest to it, and also male (24) and female (26) coupling means provided respectively on the adjacent ends of the tube pieces (22) and on the hub (12) and the adjacent end of that tube piece (22.1) closest to the hub (12), the coupling means (24, 26) enabling the assembly formed from the tube pieces (22) and hub (12) to be swivelled.

9. A mixer device (10) as claimed in claim 8, wherein the take-up means comprise: a tubular take-up element (38) one end of which is coaxially fixed to that end of the flexible transmission means (28) distant from the hub (12), the tubular take-up element (38) presenting two angularly equidistant helical slits (50) with which two respective diametrically opposing projections (52) provided on the drive shaft (56) engage; and means (58, 64, 66) for initially blocking rotation of the tubular take-up element (38) so that by virtue of the pair of helical slits (50) the rotation impressed by the drive shaft (56) enables the relative end (30) of the flexible linear means (28) to be shifted towards the drive shaft (56) to take up the distance between the tube pieces (22.1, 22.2, 22.3) and the distance between the hub (12) and the adjacent tube piece (22.1).

10. A mixer device (10) as claimed in claim 1, wherein the near end of the blades (20) is hinged to the hub (12) so that the blades (20) can pass from their rest position to their working position, and vice versa, by rotation about their respective hinging axis (16) lying perpendicular to the axis (14) of the hub (12) but not intersecting this latter (14).

11. A mixer device (10) as claimed in claim 6, wherein the male coupling means (24; 224) comprise a frusto-conical annular projection, the female coupling means (26; 226) comprising a frusto-conical projection mating with the frusto-conical projection of the male coupling means (24; 224).

12. A mixer device (10) as claimed in claim 7, wherein the elastic spacer means comprise a helical spring (36).

13. A mixer device (10) as claimed in claim 8, wherein the means for initially blocking the rotation of the tubular take-up element (38) comprise a locking ring (58) mounted on a ring support bush (60), the locking ring (58) internally presenting at least two angularly equidistant cam surfaces (64), each arranged to cooperate with a relative shoe (66) which in its turn interferes with the lateral surface of the tubular guide element (48) when the locking ring (58) is rotated from a rest position in which the shoes (66) do not interfere, to a locking position in which the shoes (66) interfere.

14. A mixer device (10) as claimed in claim 13, wherein an elastic return element (62) is also provided to return the locking ring (58) to its rest position when released.

15. A mixer device (10) as claimed in claim 13, wherein the ring support bush (60) is indirectly supported by the closure element (72), the closure element (72) presenting means (71, 74) enabling the device (10) to be swivelled about a determined horizontal axis (76).

16. A mixer device (10) as claimed in claim 8, wherein the drive shaft (56) is the output shaft of an angular transmission mechanism (80) for the rotary movement, its input shaft being rotated by a drive means.

17. A mixer device (10) as claimed in claim 8, wherein the drive shaft (56) forms part of or is operated by a motorized drive means.

18. A mixer device (10) as claimed in claim 17, wherein the motorized drive means is an electric hand drill.

19. A mixer device (10) as claimed in claim 8, wherein the drive shaft (56) forms part of or is operated by a manual drive means.

## Patentansprüche

1. Mischvorrichtung (10) zum Mischen einer Flüssigkeit, die in Behältern (94) mit einer kleinen Öffnung (92) enthalten ist, mit folgenden Merkmalen:
eine rotierbare Nabe (12) mit zumindest zwei abgewinkelten, äquidistanten Flügeln (20), die zwei Endpositionen einnehmen können, nämlich eine Arbeitsposition, in der die Flügel (20) im Wesentlichen radial von der Nabe (12) abstehen, und eine Ruheposition, in der die Flügel (20) nahe an die Drehachse (14) der Nabe (12) herangeklappt sind;
Linearmittel (28; 228) zum Übertragen einer Drehbewegung von einer Antriebswelle (56) auf die Nabe (12), wobei die linearen Übertragungsmittel (28; 228) starr gegenüber einer Verbiegung während des Betriebes sind, so dass sie schwenkbar sind;
ein Verschlusselement (72), das in der Öffnung (92) des Behälters (94) anzubringen ist, wobei das Verschlusselement (72) ein Durchgangsloch (73) aufweist, die den linearen Übertragungsmitteln (28; 228) gestattet, das Verschlusselement (72) zu durchqueren, wobei letzteres den Rest der Mischvorrichtung trägt, um seine Einsteckbewegung zu begrenzen;
**dadurch gekennzeichnet,**
**dass** das Durchgangsloch (73) in dem Verschlusselement (72) so bemessen ist, dass die linearen Übertragungsmittel (28; 228) verschwenkt werden können, wobei gleichzeitig das Ausmaß der Verschwenkung begrenzt wird, damit die Flügel (20) während des Betriebes nicht in Kontakt kommen können mit den Innenwänden (96) des Behälters (94).

2. Mischvorrichtung (10) nach Anspruch 1,
wobei der Behälter ein liegendes Fass (94) ist und das Durchgangsloch (73) in dem Verschlusselement (72) eine im Wesentlichen schlitzartige Form hat und die Achse des Schlitzes parallel zur Achse des Fasses (94) verläuft.

3. Mischvorrichtung (10) nach Anspruch 1,
wobei die linearen Übertragungsmittel für die Drehbewegung aus einem Rohrstück oder einer starren Stange bestehen.

4. Mischvorrichtung (10) nach Anspruch 1,
wobei die linearen Übertragungsmittel für die Drehbewegung flexibel sind, aber in einem Rohrstück angeordnet sind.

5. Mischvorrichtung (10) nach Anspruch 1,
wobei die linearen Übertragungsmittel (228) aus zwei oder mehreren aufeinander folgenden starren Teilstücken (222) bestehen und jedes starre Teilstück (222.i) zu dem benachbarten starren Teilstück (222.i+1) geneigt werden kann und wobei Mittel (225, 227) vorgesehen sind, um die starren Teilstücke (222) starr miteinander und mit der Nabe (12) zu verbinden, um einen Zusammenbau zu erhalten, der während des Betriebes verschwenkt werden kann.

6. Mischvorrichtung (10) nach Anspruch 1,
wobei die Drehmoment-Übertragungsmittel (28) flexibel sind und durch zwei oder mehr aufeinander folgende starre Rohrstücke (22) hindurch laufen und dass Mittel (24, 26) vorgesehen sind, um die Rohrstücke (22) und die Nabe (12) starr miteinander zu verbinden, so dass der Zusammenbau verschwenkbar ist.

7. Mischvorrichtung (10) nach Anspruch 6,
wobei elastische Zwischenstücke (36) zwischen den Rohrstücken (22) und zwischen der Nabe (12) und demjenigen Rohrstück (22.1) angeordnet sind, das der Nabe (12) am nächsten steht, damit die Rohrstücke (22) voneinander und von der Nabe (12) distanziert angeordnet bleiben, wenn sie sich in der Ruhestellung befinden.

8. Mischvorrichtung (10) nach Anspruch 6,
wobei die Mittel zur starren Verbindung der Rohrstücke (22) und der Nabe (12) Mittel (38, 50, 48, 46) aufweisen, um den Abstand zwischen den Rohrstücken (22) und zwischen der Nabe (12) und dem ihr am nächsten stehenden Rohrstück (22.1) aufzunehmen, und dass männliche (24) und weibliche (26) Kupplungsmittel an den benachbarten Enden der Rohrstücke (22) und an der Nabe (12) und dem benachbarten Ende des ihr am nächsten stehenden Rohrstückes (22.1) vorgesehen sind, wobei diese Kupplungsmittel (24, 26) dem aus Rohrstücken (22) und Nabe (12) bestehenden Zusammenbau gestatten, verschwenkt zu werden.

9. Mischvorrichtung (10) nach Anspruch 8,
wobei die Aufnahmemittel folgende Merkmale aufweisen:
ein rohrförmiges Aufnahmemittel (38), dessen eines Ende koaxial verbunden ist mit dem Ende der von der Nabe (12) entfernten flexiblen Übertragungsmittel (28),
wobei das rohrförmige Aufnahmeelement (38) zwei winklige äquidistante schraubengangförmige Schlitze (50) aufweist, in welche zwei entgegengesetzt gerichtete Vorsprünge (52) an der Antriebswelle (56) hineinragen; und dass Mittel (58, 64, 66) vorgesehen sind, um die Rotation des rohrförmigen Aufnahmeelementes (38) zu blockieren, so dass mittels der beiden schraubengangförmigen Schlitze (50) die Rotation der Antriebswelle (56) es dem relativen Ende (30) der flexiblen Linearmittel (28) gestattet, zu der Antriebswelle (56) verschoben zu werden und den Abstand zwischen den Rohrstücken (22.1, 22.2, 22.3) und den Abstand zwischen der Nabe (12) und dem benachbarten Rohrstück (22.1) aufzunehmen.

10. Mischvorrichtung (10) nach Anspruch 1,
wobei das nahe Ende der Flügel (20) schwenkbar an der Nabe (12) gelagert ist, so dass die Flügel (20) von ihrer Ruheposition in ihre Arbeitsposition und umgekehrt verschwenkbar sind, in dem sie um ihre jeweilige Schwenkachse (16), die sich senkrecht zur Achse (14) der Nabe (12) erstreckt, ohne diese zu unterbrechen, schwenken.

11. Mischvorrichtung (10) nach Anspruch 6,
wobei das männliche Kupplungsmittel (24; 224) einen Kegelstumpf ähnlichen ringförmigen Vorsprung aufweist und das weibliche Kupplungsmittel (26; 226) einen Kegelstumpf ähnlichen Vorsprung aufweist, der mit dem Kegelstumpf ähnlichen Vorsprung des männlichen Kupplungsmittels (24; 224) korrespondiert.

12. Mischvorrichtung (10) nach Anspruch 7,
wobei die elastischen Zwischenstücke eine Schraubenfeder (36) enthalten.

13. Mischvorrichtung (10) nach Anspruch 8,
wobei die Mittel zum Blockieren der Rotation des rohrförmigen Aufnahmeelementes (38) einen Blockierring (58) aufweisen, der auf einer ringförmigen Trägerbuchse (60) montiert ist und innen zumindest zwei winklige, äquidistante Nockenflächen (64) aufweist, von denen jede mit einem relativen Schuh (66) zusammenwirkt, der seinerseits mit der Seitenfläche eines rohrförmigen Führungselementes (48) zusammenwirkt, wenn der Blockierring (58) aus einer Ruheposition, in welcher die Schuhe (66) außer Eingriff stehen, in eine Blockierposition verschwenkt wird, in welcher die Schuhe (66) in Eingriff kommen.

14. Mischvorrichtung (10) nach Anspruch 13,
wobei ein elastisches Rückzugselement (62) vorgesehen ist, um den Blockierring (58) in seine Ruheposition zu bringen, nachdem er freigegeben worden ist.

15. Mischvorrichtung (10) nach Anspruch 13,
wobei die ringförmige Trägerbuchse (60) indirekt von dem Verschlusselement (72) gehalten wird und dieses Verschlusselement (72) Mittel (71, 74) aufweist, damit die Mischvorrichtung (10) um eine vorgegebene Horizontalachse (76) verschwenkbar ist.

16. Mischvorrichtung (10) nach Anspruch 8,
wobei die Antriebswelle (56) die Ausgangswelle eines Winkelgetriebes (80) für die Drehbewegung ist und deren Eingangswelle durch einen Antrieb in Rotation versetzt wird.

17. Mischvorrichtung (10) nach Anspruch 8,
wobei die Antriebswelle (56) ein Teil eines Motorantriebes ist oder von diesem angetrieben wird.

18. Mischvorrichtung (10) nach Anspruch 17,
wobei die motorischen Antriebsmittel aus einer elektrischen Hand-Bohrmaschine bestehen.

19. Mischvorrichtung (10) nach Anspruch 8,
wobei die Antriebswelle (56) Teil eines manuellen Antriebes ist oder davon angetrieben wird.

## Revendications

1. Dispositif mélangeur (10) pour mélanger un liquide contenu dans des conteneurs (94) ayant une ouverture de petite dimension (92), comportant :
un moyeu rotatif (12) muni d'au moins deux lames angulairement équidistantes (20) qui peuvent prendre deux positions d'extrémité, c'est-à-dire une position de travail dans laquelle les lames (20) s'étendent à partir du moyeu (12) sensiblement dans une direction radiale, et une position de repos dans laquelle les lames (20) sont pliées proches de l'axe de rotation (14) du moyeu (12),
des moyens linéaires (28 ; 228) pour transmettre un mouvement rotatif provenant d'un arbre d'entraînement (56) au moyeu (12), les moyens de transmission linéaires (28 ; 228) étant rigides à l'encontre d'une flexion en fonctionnement, en pouvant ainsi être pivotés,
un élément de fermeture (72) devant être appliqué à l'ouverture (92) du conteneur (94), l'élément de fermeture (72) présentant un trou traversant (73) permettant aux moyens de transmission linéaires (28 ; 228) de passer à travers l'élément de fermeture (72), ce dernier (72) supportant le repos du dispositif mélangeur (10) de manière à limiter son insertion,
**caractérisé en ce que** le trou traversant (73) présent dans l'élément de fermeture (72) a des dimensions qui permettent aux moyens de transmission linéaires (28 ; 228) être pivotés, tout en limitant en même temps son étendu pour empêcher les lames (20) de venir en contact avec les parois intérieures (96) du conteneur (94) en fonctionnement.

2. Dispositif mélangeur (10) selon la revendication 1, dans lequel, si le conteneur est un tonneau couché (94), le trou traversant (73) dans l'élément de fermeture (72) prend sensiblement la forme d'une fente, dont l'axe doit être disposé parallèlement à l'axe du tonneau (94).

3. Dispositif mélangeur selon la revendication 1, dans lequel les moyens de transmission linéaires pour le mouvement rotatif sont constitués d'une pièce de tube ou d'une barre rigide.

4. Dispositif mélangeur selon la revendication 1, dans lequel les moyens de transmission linéaires pour le mouvement rotatif sont souples, mais sont contenus dans une pièce de tube.

5. Dispositif mélangeur selon la revendication 1, dans lequel les moyens de transmission linéaires (228) sont constitués de deux parties rigides consécutives (222) ou plus, chaque partie rigide (222.i) pouvant être inclinée vers la partie rigide adjacente (222.i + 1), des moyens (225, 227) étant fournis pour faire en sorte que les parties rigides (222) soient rigides l'une par à l'autre et par rapport au moyeu (12), pour obtenir un assemblage qui peut être pivoté en fonctionnement.

6. Dispositif mélangeur (10) selon la revendication 1, dans lequel les moyens de transmission de mouvement rotatif (28) sont souples, et sont insérés à travers deux pièces de tube rigides consécutives (22) ou plus, des moyens (24, 26) étant fournis pour faire en sorte que les pièces de tube (22) et le moyeu (12) soient rigides les uns par rapport aux autres afin de permettre à l'assemblage être pivoté.

7. Dispositif mélangeur (10) selon la revendication 6, dans lequel des moyens d'espacement élastiques (36) sont interposés entre les pièces de tube (22) et entre le moyeu (12) et cette pièce de tube (22.1) la plus proche de celui-ci (12) pour maintenir les pièces de tube (22) espacées, et espacées du moyeu (12) dans la position de repos.

8. Dispositif mélangeur (10) selon la revendication 6, dans lequel les moyens pour faire en sorte que les pièces de tube (22) et le moyeu (12) soient rigides les uns par rapport aux autres comportent des moyens (38, 50, 48, 46) pour compenser la distance entre les pièces de tube (22) et entre le moyeu (12) et cette pièce de tube (22.1) la plus proche de celui-ci, et également des moyens de couplage males (24) et femelles (26) agencés respectivement sur les extrémités adjacentes des pièces de tube (22) et sur le moyeu (12) et l'extrémité adjacente de cette pièce de tube (22.i) la plus proche du moyeu (12), les moyens de couplage (24, 26) permettant à l'assemblage formé à partir des pièces de tube (22) et du moyeu (12) d'être pivoté.

9. Dispositif mélangeur (10) selon la revendication 8, dans lequel les moyens de compensation comportent : un élément de compensation tubulaire (38), dont une première extrémité est fixée coaxialement sur cette extrémité des moyens de transmission souples (28) distante du moyeu (12), l'élément de compensation tubulaire (38) présentant deux fentes hélicoïdales angulairement équidistantes (50) avec lesquelles deux saillies respectives diamétralement opposées (52) agencées sur l'arbre d'entraînement (56) viennent en prise, et des moyens (58, 64, 66) pour bloquer initialement une rotation de l'élément de compensation tubulaire (38), de sorte qu'en vertu de la paire de fentes hélicoïdales (50), la rotation imprimée par l'arbre d'entraînement (56) permet à l'extrémité relative (30) des moyens linéaires souples (28) être décalée vers l'arbre d'entraînement (56) pour compenser la distance entre les pièces de tube (22.1, 22.2, 22.3) et la distance entre le moyeu (12) et la pièce de tube adjacente (22.1).

10. Dispositif mélangeur (10) selon la revendication 1, dans lequel l'extrémité proche des lames (20) est articulée sur le moyeu (12) de telle sorte que les lames (20) peuvent passer de leur position de repos à leur position de travail, et vice versa, par une rotation autour de leur axe d'articulation respectif (16) s'étendant perpendiculaire à l'axe (14) du moyeu (12), mais ne recoupant pas ce dernier (14).

11. Dispositif mélangeur (10) selon la revendication 6, dans lequel les moyens de couplage males (24 ; 224) comportent une saillie annulaire tronconique, les moyens de couplage femelles (26 ; 226) comportant une saillie tronconique s'appariant avec la saillie tronconique des moyens de couplage males (24 ; 224).

12. Dispositif mélangeur (10) selon la revendication 7, dans lequel les moyens d'espacement élastiques comportent un ressort hélicoïdal (36).

13. Dispositif mélangeur (10) selon la revendication 8, dans lequel les moyens pour bloquer initialement la rotation de l'élément de compensation tubulaire (38) comportent un anneau de verrouillage (58) monté sur un manchon de support d'anneau (60), l'anneau de verrouillage (58) présentant intérieurement au moins deux surfaces de came angulairement équidistantes (64), agencées chacune pour coopérer avec un patin relatif (66) qui interfère à son tour avec la surface latérale de l'élément de guidage tubulaire (48) lorsque l'anneau de verrouillage (58) est tourné d'une position de repos, dans laquelle les patins (66) n'interfèrent pas, vers une position de verrouillage dans laquelle les patins (66) interfèrent.

14. Dispositif mélangeur (10) selon la revendication 13, dans lequel un élément de rappel élastique (62) est également fourni pour rappeler l'anneau de verrouillage (58) vers sa position de repos lorsqu'il est libéré.

15. Dispositif mélangeur (10) selon la revendication 13, dans lequel le manchon de support d'anneau (60) est supporté indirectement par l'élément de fermeture (72), l'élément de fermeture (72) présentant des moyens (71, 74) permettant au dispositif (10) être pivoté autour d'un axe horizontal déterminé (76).

16. Dispositif mélangeur (10) selon la revendication 8, dans lequel l'arbre d'entraînement (56) est l'arbre de sortie d'un mécanisme de transmission angulaire (80) pour le mouvement de rotation, son arbre d'entrée étant tourné par des moyens d'entraînement.

17. Dispositif mélangeur (10) selon la revendication 8, dans lequel l'arbre d'entraînement (56) forme une partie de moyens d'entraînement motorisés, ou est actionné par ceux-ci.

18. Dispositif mélangeur (10) selon la revendication 17, dans lequel les moyens d'entraînement motorisés sont une perceuse électrique manuelle.

19. Dispositif mélangeur (10) selon la revendication 8, dans lequel l'arbre d'entraînement (56) forme une partie de moyens d'entraînement manuels, ou est actionné par ceux-ci.
